# EUROPEAN PATENT APPLICATION

(11) **EP 2 309 817 A1**
(43) Date of publication of application: **13.04.2011**
(21) Application number: 10174395.3
(22) Date of filing: 27.08.2010
(51) Int. Cl.: H04W 74/08

(54) **Method and System for Random Access in Small Cell of 3GPP LTE-Advanced System**

(30) Priority: 12.10.2009 KR 20090096563
(71) Applicant: Electronics and Telecommunications Research Institute, Daejeon 305-700 (KR)
(72) Inventor: Yang, Mi Jeong, 305-720, Daejeon (KR); Lim, Soon Yong, 305-755, Daejeon (KR); Park, Aesoon, 305-755, Daejeon (KR)
(74) Representative: Betten & Resch

(57) **Abstract**

Provided is a random access method and system of simplifying a random access process between a base station managing a small cell and a terminal included in the small cell, based on a characteristic of the small cell. The random access system may include the base station to manage the small cell, an available preamble index set including a plurality of preamble indexes unassigned to the terminal, and a fixed preamble index assigned to the terminal, to select any one preamble index from the unassigned preamble indexes as a fixed preamble index of the terminal by transmitting, to the terminal, the available preamble index set when the terminal enters the small cell, and to complete a random access process using the fixed preamble index of the terminal when a random access including the fixed preamble index of the terminal is received from the terminal.

## Description

### BACKGROUND

### 1. Field of the invention

Embodiments of the present invention relate to an effective random access method in a small cell based on a 3^{rd} Generation Partnership Project (3GPP) Long Term Evolution (LTE)-Advanced system, and more particularly, to a random access method and system of simplifying a random access process between a base station managing a small cell and a terminal included in the small cell, based on a characteristic of the small cell.

### 2. Description of the Related Art

A 3^{rd} Generation Partnership Project (3GPP) Long Term Evolution (LTE)-Advanced system defines a construction of a small cell based on a Home-enhanced Node B (eNB) base station.

A base station managing the small cell may manage a relatively small number of terminals and a terminal entering the small cell may have a static characteristic compared to terminals included in a macro cell.

In the 3GPP LTE-Advanced system, a terminal may generally perform a random access process in order to receive uplink timing information from a base station and perform synchronization, or to transmit a user message or a power control setup for an initial uplink transmission.

The random access process may need to be performed every time a connected mode is shifted from an idle .mode. Accordingly, it may increase a call setup delay.

In particular, when a preamble collision occurs due to a random access of multiple terminal, the call setup delay may further increase.

The random access process may need to be performed even in the small cell. Compared to the terminals included in the macro cell, the terminal entering the small cell has the static characteristic, however, may perform the random access using the same scheme as a scheme used in the macro cell.

Accordingly, there is a need for an effective random access method in a small cell based on a characteristic of the small cell.

### SUMMARY

An aspect of the present invention provides a method and system for a random access in a small cell that may assign a fixed preamble index to a terminal entering a small cell, based on a static characteristic of the terminal entering the small cell, and set up a call in the fixed preamble index of the terminal, and thereby may simplify a random access process.

According to an aspect of the present invention, there is provided random access system in a small cell, including: a base station to manage the small cell, an available preamble index set including a plurality of preamble indexes unassigned to a terminal included in the small cell, and a fixed preamble index assigned to the terminal, to select any one preamble index from the unassigned preamble indexes as a fixed preamble index of a terminal not having the fixed preamble index by transmitting, to the small cell, a broadcast message including the available preamble index set, and to complete a random access process of the terminal using the fixed preamble index of the terminal when a random access including the fixed preamble index of the terminal is received from the terminal.

According to another aspect of the present invention, there is provided a random access system in a small cell, including: a terminal to select any one preamble index from a plurality of preamble indexes included in an available preamble index set when the available preamble index set including the plurality of preamble indexes unassigned to the terminal is received from a base station, to generate and transmit a random access including the selected preamble index, and to transmit a random access including a fixed preamble index when information indicating that the selected preamble index is selected as the fixed preamble index is received from the base station and subsequently the random access is required.

According to still another aspect of the present invention, there is provided a random access method in a small cell, including: managing an available preamble index set including a plurality of preamble indexes unassigned to a terminal included in the small cell; selecting any one preamble index from the unassigned preamble indexes as a fixed preamble index of the terminal unassigned with a fixed preamble index by transmitting, to the small cell, a broadcast message including the available preamble index set; and completing a random access process of the terminal when a random access including the fixed preamble index of the terminal is received from the terminal.

According to yet another aspect of the present invention, there is provided a random access method in a small cell, including: receiving, from a base station, an available preamble index set including a plurality of preamble indexes unassigned to a terminal included in the small cell; selecting any one preamble index from the plurality of preamble indexes included in the available preamble index set; generating and transmitting a random access including the selected preamble index; receiving, from the base station, information indicating that the selected preamble index is selected as a fixed preamble index; and completing a random access process by transmitting the random access including the fixed preamble index when the random access is required.

### EFFECT

According to embodiments of the present invention, it is possible to simplify a random access process by assigning a fixed preamble index to a terminal entering a small cell, based on a static characteristic of the terminal entering the small cell, and by setting up a call in the fixed preamble index of the terminal.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating an example of a random access system in a small cell according to an embodiment of the present invention;
FIG. 2 is a flowchart illustrating a random access method in a small cell according to an embodiment of the present invention;
FIG. 3 is a flowchart illustrating a scheme of selecting a fixed preamble index according to an embodiment of the present invention; and
FIG. 4 is a flowchart illustrating a scheme of performing a random access according to an embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

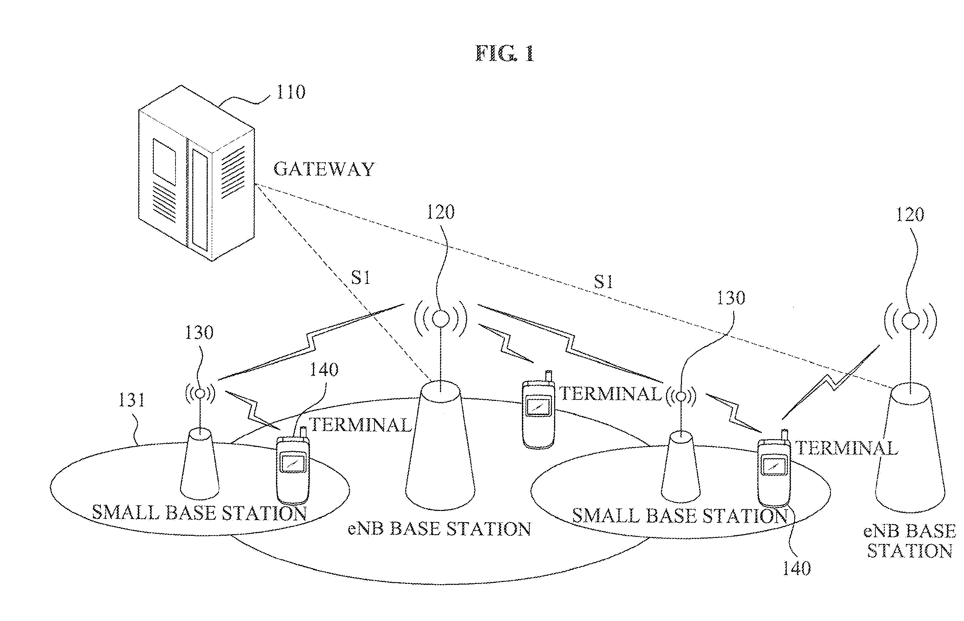

FIG. 1 is a diagram illustrating an example of a random access system in a small cell 131 according to an embodiment of the present invention.

As shown in FIG. l, the random access system may include a small base station 130 to manage the small cell 131, to directly receive information transmitted from a gateway 110, and to receive information from an enhanced Node B (eNB) base station 120, and a terminal 140 included in the small cell 131. The eNB base station 120 may manage a cell having the same or more than a predetermined coverage.

The small base station 130 may manage the small cell 131, an available preamble index set including a plurality of preamble indexes unassigned to the terminal 140 included in the small cell 131, and a fixed preamble index assigned to the terminal 140.

The small base station 130 may periodically transmit, to the small cell 131, a broadcast message including the available preamble index set. When the small base station 130 receives, from the terminal 140 entering the small cell 131 to receive the broadcast message, a random access including one of the preamble indexes that are included in the available preamble index set, the small base station 130 may select, as a fixed preamble index of the terminal 140, the preamble index included in the received random access. When the small base station 130 receives, from the terminal 140, the random access including the fixed preamble index of the terminal 140, the small base station 130 may complete a random access process.

Specifically, the small base station 130 may transmit, to the terminal 140, a random access response including resource information and the preamble index included in the random access, and may receive, from the terminal 140, an uplink message transmitted according to the resource information. When a preamble collision does not occur due to the uplink message, the small base station 130 may remove the preamble index included in the random access from the available preamble index set, and may select the preamble index included in the random access as the fixed preamble index of the terminal 140. The small base station 130 may transmit, to the terminal 140, the selected preamble index as the fixed preamble index of the terminal 140.

The fixed preamble index corresponds to a preamble index in which the preamble collision does not occur. Accordingly, the small base station 130 may simplify the random access process executed by the terminal 140 using the fixed preamble index in order to set up a call.

Specifically, when the random access including the fixed preamble index of the terminal 140 is received from the terminal 140, the small base station 130 may complete the random access process by transmitting, to the terminal 140, the random access response including the resource information, and by receiving, from the terminal 140, the uplink message transmitted according to the resource information. Specifically, each terminal is enabled to select a fixed preamble index in which the preamble collision does not occur, and to perform a random access using the fixed preamble index. Accordingly, a process of selecting, by each terminal, a preamble index for each random access and a process of verifying, by the small base station 130, whether the preamble collision occurs due to the selected preamble index may be omitted.

Where a handover occurs in the terminal 140, the small base station 130 may transmit a handover message to the terminal 140 and perform a change process so that the preamble index selected as the fixed preamble index of the terminal 140 may not be assigned to the terminal 140. The small base station 130 may add, to the available preamble index set, the preamble index selected as the fixed preamble index of the terminal 140.

The small base station 130 may verify a last operation time of the terminal 140. When the terminal 140 does not operate for the same or more than a predetermined period of time, the small base station 130 may perform a change process so that the corresponding preamble index may not be assigned to the terminal 140, and may add, to the available preamble index set, the preamble index selected as the fixed preamble index of the terminal 140 not operating. The small base station 130 may transmit, to the terminal 140 not operating, a message indicating that the fixed preamble index is deleted.

The preamble index utilized as the fixed preamble index of the terminal 140 may be included in the available preamble index set.

The predetermined period of time may be set according to an operation method of the small cell 131. A surplus preamble index of the available preamble index set may be obtained by retrieving the selected preamble index from a terminal that is included in the small cell 131, however, is not used.

When the terminal 140 receives, from the small base station 130, the broadcast message including the available preamble index set, the terminal 140 may select one preamble index from the available preamble index set included in the broadcast message, and may generate a random access including the selected preamble index and transmit the generated random access to the small base station 130. The terminal 140 may receive, from the small base station 130, a random access response corresponding to the random access.

The terminal 140 receiving the random access response may verify whether the random access response is transmitted using the selected preamble index. When the random access response is transmitted using the selected preamble index, the terminal 140 may transmit an uplink message according to the resource information included in the random access response.

In this case, the small base station 130 receiving the uplink message may verify that the collision does not occur and then may transmit response data to the terminal and delete the preamble index assigned to the terminal 140 from the available preamble index set. The terminal 140 receiving the response data may utilize the selected preamble index as the fixed preamble index.

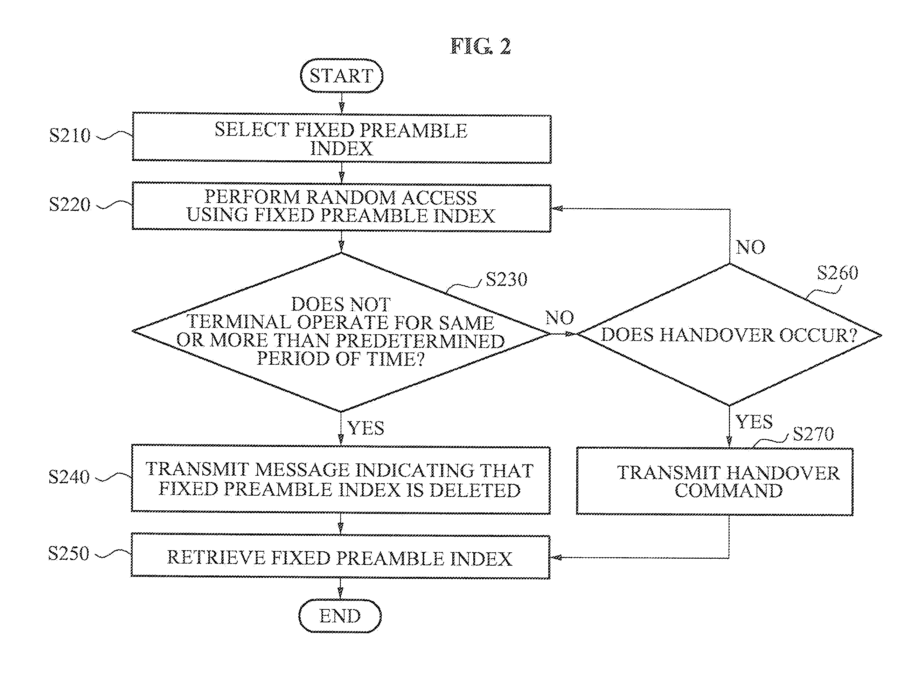

FIG. 2 is a flowchart illustrating a random access method in a small cell according to an embodiment of the present invention.

In operation S210, a small base station may periodically transmit, to the small cell, a broadcast message including an available preamble index set, so that a terminal entering the small cell may perform a random access, and may select a fixed preamble index of the terminal according to the random access.

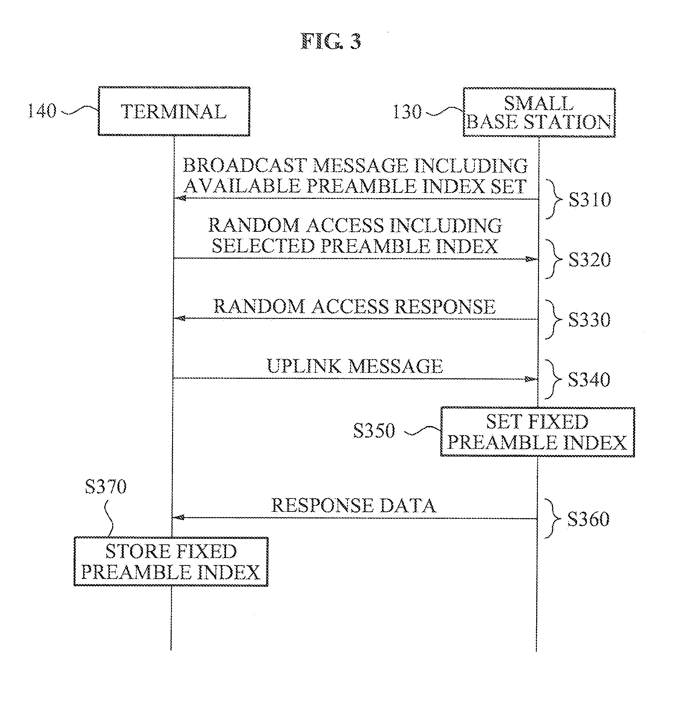

A scheme of selecting the fixed preamble index will be further described with reference to FIG. 3.

In operation S220, when the random access is required, the terminal may perform a simplified random access using the selected fixed preamble index.

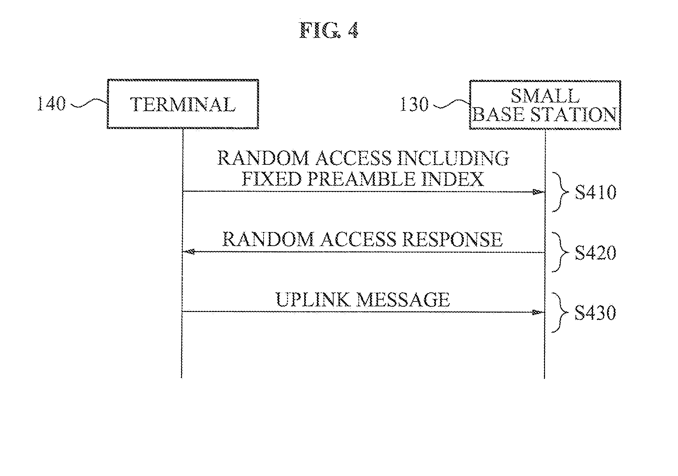

A scheme of performing the simplified random access will be further described with reference to FiG. 4,

in operation S230, the small base station may verify a last operation time of then terminal and may verify whether the terminal does not operate for the same or more than a predetermined period of time.

In operation S240, when it is verified that the terminal does not operate for the same or more than the predetermined period of time, the small base station may transmit, to the terminal, a message indicating that the fixed preamble index is deleted.

In operation S250, the small base station may retrieve the fixed preamble index by adding, to the available preamble index set, the preamble index selected as the fixed preamble index of the terminal that is verified to not operate for the same or more than the predetermined period of time. Also, the small base station may retrieve the fixed preamble index by adding, to the available preamble index set, the preamble index selected as the fixed preamble index of the terminal that is verified in which a handover occurs in operation S260.

In operation S260, the small base station may verify whether the handover occurs in the terminal.

In operation S270, the small base station 130 may transmit a handover command to the corresponding terminal to thereby execute the handover.

FIG. 3 is a flowchart illustrating a scheme of selecting a fixed preamble index according to an embodiment of the present invention. According to an embodiment of the present invention, operations S310 through S370 may be included in operation S210 of FIG. 2.

In operation S310, a small base station 130 may periodically transmit, to a terminal included in a small cell, a broadcast message including an available preamble index set.

In operation S320, the terminal 140 not having a unique preamble index may extract the available preamble index set from the broadcast message, select one preamble index from preamble indexes included in the extracted available preamble index set, generate a random access including the selected preamble index, and transmit the generated random access to the small base station 130.

In operation S330, the small base station 130 may transmit, to the terminal 140, a random access response including resource information by using the preamble index included in the received random access.

In operation S340, the terminal 140 may verify whether the received random access response is transmitted using the selected preamble index. When the random access response is transmitted using the selected preamble index, the terminal 140 may transmit an uplink message according to the resource information included in the random access response.

In operation S350, the small base station 130 may verify whether a preamble collision occurs when the uplink message is received. When the preamble collision does not occur, the small base station 130 may remove the selected preamble index from the available preamble index set, and may select the selected preamble index as a fixed preamble index of the terminal 140.

In operation S360, the small base station 130 may transmit, to the terminal 140 as response data, information indicating that a collision of the fixed preamble index of the terminal 140 does not occur.

In operation S370, the terminal 140 may store the fixed preamble index of the terminal 140.

FIG. 4 is a flowchart illustrating a scheme of performing a random access according to an embodiment of the present invention. According to an embodiment of the present invention, operations S410 through S430 may be included in operation S220 of FIG. 2.

In operation S410, a terminal 140 may generate a random access including a -fixed preamble index of the terminal 140, and transmit the generated random access to the small base station 130.

In operation S420, the small base station 130 may transmit, to the terminal 140, a random access response including resource information by utilizing the fixed preamble index included in the received random access.

In operation S430, the terminal 140 may transmit an uplink message according to the resource information included in the random access response.

In this case, since the uplink message is transmitted using the fixed preamble index of the terminal 140 that is verified in which a preamble collision does not occur, the small base station 130 may process the uplink message without verifying whether the preamble collision occurs, and then complete the random access process.

According to embodiments of the present invention, a random access system in a small cell may assign a fixed preamble index to a terminal entering the small cell, based on a static characteristic of the terminal entering the small cell, and enable the terminal to utilize the assigned fixed preamble index. Through this, a random access process may be simplified.

The random access method according to the above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A random access system in a small cell, comprising:
a base station to manage the small cell, an available preamble index set including a plurality of preamble indexes unassigned to a terminal included in the small cell. and a fixed preamble index assigned to the terminal, to select any one preamble index from the unassigned preamble indexes as a fixed preamble index of a terminal not having the fixed preamble index by transmitting, to the small cell, a broadcast message including the available preamble index set, and to complete a random access process of the terminal using the fixed preamble index of the terminal when a random access including the fixed preamble index of the terminal is received from the terminal.

2. The system of claim 1, wherein the base station periodically transmits, to the small cell, the broadcast message including the available preamble index set, receives a random access including one of the preamble indexes that are included in the available preamble index set, from a terminal entering the small cell to receive the broadcast message, and selects, as the fixed preamble index of the terminal, the preamble index included in the received random access.

3. The system of claim 2, wherein:
when the random access is received from the terminal, the base station transmits, to the terminal, a random access response including resource information using the selected preamble index and receives, from the terminal, an uplink message transmitted according to the resource information, and
when a preamble collision does not occur due to the uplink message, the base station removes the selected preamble index from the available preamble index set and selects the selected preamble index as the fixed preamble index of the terminal.

4. The system of claim 1, 2, or 3 wherein:
when the random access including the fixed preamble index of the terminal is received from the terminal, the base station completes the random access process by transmitting, to the terminal, a random access response including resource information and by receiving, from the terminal, an uplink message transmitted according to the resource information.

5. The system of one of claims 1 to 4, wherein:
when a handover occurs in the terminal, the base station transmits a handover message to the terminal and adds, to the available preamble index set, the preamble index selected as the fixed preamble index of the terminal.

6. The system of one of claims 1 to 5, wherein:
the base station verifies a last operation time of the terminal, and
when the terminal does not operate for the same or more than a predetermined period of time, the base station adds, to the available preamble index set, the preamble index selected as the fixed preamble index of the terminal and transmits, to the terminal not operating, a message indicating that the fixed preamble index is deleted.

7. A random access system in a small cell, comprising:
a terminal to select any one preamble index from a plurality of preamble indexes included in an available preamble index set when the available preamble index set including the plurality of preamble indexes unassigned to the terminal is received from a base station, to generate and transmit a random access including the selected preamble index, and to transmit a random access including a fixed preamble index when information indicating that the selected preamble index is selected as the fixed preamble index is received from the base station and subsequently the random access is required.

8. The system of claim 7, wherein the terminal receives a broadcast message and extracts the available preamble index set from the broadcast message.

9. The system of claim 7, wherein:
the terminal receives a random access response corresponding to the random access from the base station and verifies whether the random access response is transmitted using the selected preamble index, and
when the random access response is transmitted using the selected preamble index, the terminal transmits an uplink message according to resource information included in the random access response, and
when information indicating that a collision of the selected preamble index does not occur is received as response data from the base station, the terminal selects the selected preamble index as the fixed preamble index.

10. The system of claim 7, 8, or 9 wherein:
when the terminal needs the random access after the fixed preamble index is selected, the terminal transmits, to the base station, the random access including the fixed preamble index, receives, from the base station, a random access response including resource information corresponding to the random access, and transmits, to the base station, an uplink message according to the resource information and then completes a random access process.

11. A random access method in a small cell, comprising:
managing an available preamble index set including a plurality of preamble indexes unassigned to a terminal included in the small cell;
selecting any one preamble index from the unassigned preamble indexes as a fixed preamble index of the terminal unassigned with a fixed preamble index by transmitting, to the small cell, a broadcast message including the available preamble index set; and
completing a random access process of the terminal when a random access including the fixed preamble index of the terminal is received from the terminal.

12. The method of claim 11, wherein the selecting any one preamble index from the unassigned preamble indexes comprises:
periodically transmitting, to the small cell, the broadcast message including the available preamble set;
receiving a random access including one of the preamble indexes that are included in the available preamble index set, from a terminal entering the small cell to receive the broadcast message; and
selecting, as the fixed preamble index of the terminal, the preamble index included in the received random access.

13. The method of claim 12, wherein the selecting, as the fixed preamble index of the terminal, the preamble index comprises:
transmitting, to the terminal, a random access response including resource information using the preamble index included in the random access:
receiving, from the terminal, an uplink message transmitted according to the resource information;
verifying whether a preamble collision occurs due to the uplink message;
removing the selected preamble index from the available preamble index set when the preamble collision does not occur due to the uplink message;
selecting the selected preamble index as the fixed preamble index of the terminal; and
transmitting, to the terminal, a response message indicating that a collision of the selected preamble index does not occur.

14. The method of claim 11, 12, or 13 further comprising:
receiving, from the terminal, the random access including the fixed preamble index of the terminal;
transmitting, to the terminal, a random access response including resource information; and
receiving, from the terminal., an uplink message transmitted according to the resource information.

15. A random access method in a small cell, comprising:
receiving, from a base station, an available preamble index set including a plurality of preamble indexes unassigned to a terminal included in the small cell;
selecting any one preamble index from the plurality of preamble indexes included in the available preamble index set;
generating and transmitting a random access including the selected preamble index;
receiving, from the base station, information indicating that the selected preamble index is selected as a fixed preamble index; and
completing a random access process by transmitting the random access including the fixed preamble index when the random access is required.
